## Europäisches Patentamt
## European Patent Office
## Office européen des brevets

(19)

(11) Veröffentlichungsnummer: **0 114 398**
**B1**

(12) # EUROPÄISCHE PATENTSCHRIFT

(45) Veröffentlichungstag der Patentschrift:
**24.06.87**

(51) Int. Cl.⁴: **B 65 D 35/10,** B 29 D 23/20

(21) Anmeldenummer: **83113128.9**

(22) Anmeldetag: **27.12.83**

(54) Zusammendrückbarer Laminattubenbehälter.

(30) Priorität: **25.01.83 US 461110**

(43) Veröffentlichungstag der Anmeldung:
**01.08.84 Patentblatt 84/31**

(45) Bekanntmachung des Hinweises auf die Patenterteilung:
**24.06.87 Patentblatt 87/26**

(84) Benannte Vertragsstaaten:
**CH DE FR GB IT LI**

(56) Entgegenhaltungen:
**DE - A - 1 922 369**
**GB - A - 1 550 137**
**US - A - 3 260 411**
**US - A - 3 356 263**
**US - A - 4 132 331**

(73) Patentinhaber: **Automation Industrielle SA, Route de Savoie, CH-1896 Vouvry (CH)**

(72) Erfinder: **Grimsley, Arvid K., 61 Gutzon Borglum Road, Stamford Connecticut 06903 (US)**

(74) Vertreter: **Patentanwälte Zellentin, Zweibrückenstrasse 15, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen zusammendrückbaren Behälter mit einem vorgeformten Kopfstück mit zylindrischem Hals, einer Ausgabeöffnung und einer, die Ausgabeöffnung überdeckenden Kappe mit einem geschichteten Schulterstück, das wenigstens eine Aussen- und eine Innenschicht aufweist, und mit einem Tubenkörper aus einem mehrschichtigen Laminat mit mindestens einer Aussen- und Innenschicht, wobei das Schulterstück mit dem Kopfstück und mit dem oberen Rand des Tubenkörpers verbunden ist, und das Kopfstück eine Schulter mit einer sich vom zylindrischen Hals weg erstreckenden Aussenfläche aufweist, die die Verbindungsfläche mit dem Schulterstück ist.

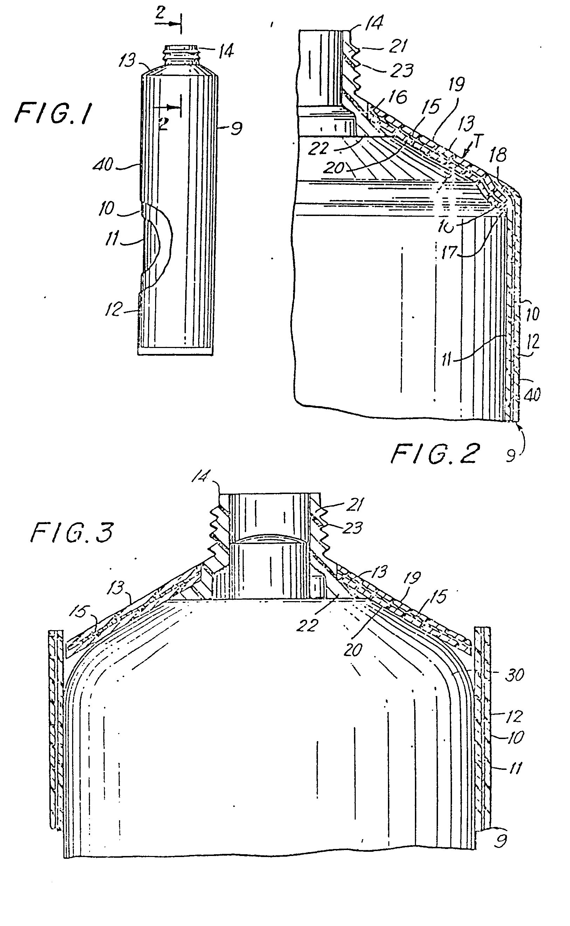

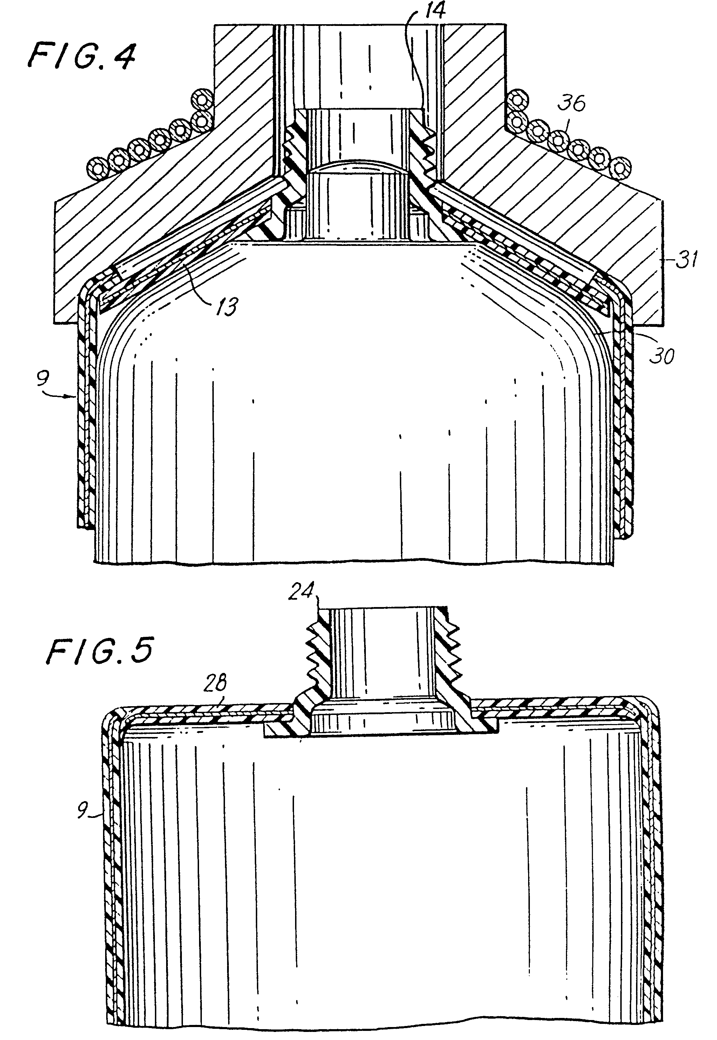

Derartige Behälter sind aus der US-A 4 132 331 bekannt. Bei der aus Fig. 4 und 5 bekannten Ausführungsform ist das Kopfstück sowohl mit dem Schulterteil als auch mit dem Tubenkörper verbunden. Dies bedeutet, dass für verschiedene Behälterdurchmesser auch verschiedene Kopfstücke hergestellt und gelagert werden müssen. Bei der in Fig. 3 dargestellten Ausführungsform weist das Kopfstück keine Schulter auf, ist zylinderförmig gestaltet und weist eine nach unten offene Ringnut auf. Der Verbindungskörper zwischen Kopfstück und Tubenkörper ist im oberen Teil zu einem zylindrischen Halsteil geformt, das in die Nut des Kopfstücks eingeführt werden muss. Das Einfügen des Verbindungskörpers in das Kopfstück ist fertigungstechnisch und bezüglich der Festigkeitseigenschaften der hergestellten Verbindung problematisch. Da die Nut einen trichterförmigen Eingang aufweist, besteht die Gefahr, dass beim Ausdrücken des Behälterinhalts der Tubenkopf abgesprengt wird. Bei keiner dieser Ausführungsformen ist es zudem möglich, die Ausgabeöffnung ohne zusätzliche Massnahmen zu verschliessen, was bei verschiedenen Tubeninhalten, z.B. Lebensmittel, zwingend erforderlich ist.

Aus der US-A 3 260 411 ist ein Behälter aus einem mehrschichtigen Laminat mit mindestens einer Aussen- und Innenschicht bekannt, der am inneren Boden des Kopfstücks einen als Sperrschicht dienenden tellerförmigen Laminatkörper aufweist, der die Ausgabeöffnung überdeckt. Hierbei wird der Tubenkörper und der tellerförmige Laminatkörper durch Einspritzen des Kopfstücks verbunden. Diese Herstellungsform im Spritzguss zum Verbinden der Einzelteile ist verhältnismässig aufwendig und es verbleibt im Randbereich zwischen Tubenrohr und Bodensperrschicht eine randliche Zone mit erhöhter Gasdurchlässigkeit.

Aufgabe der Erfindung ist es, einen Behälter der eingangs genannten Art dahingehend zu verbessern, dass bei verschiedenen Durchmessern gleiche Kopfstücke verwendbar sind und dennoch eine hohe Gasdichtheit als auch eine hohe Fertigungsgerechtigkeit gegeben ist und die Möglichkeit besteht, auf einfache Weise die Ausgabeöffnung zu überdecken. Im Ergebnis soll eine Tube mit verschiedenen Durchmessern und überdeckter Ausgabeöffnung einfacher und kostengünstiger hergestellt werden können.

Diese Aufgabe wird durch einen zusammendrückbaren Behälter mit den Merkmalen des Anspruchs 1 gelöst.

In den Unteransprüchen sind vorteilhafte Ausgestaltungen der Erfindung dargelegt.

Ein Vorteil des erfindungsgemässen Behälters besteht darin, dass das geformte Kopfstück für Laminattuben Verwendung finden kann, die in grossem Umfang variierende Durchmesser aufweisen, da das vorgeformte Kopfstück unabhängig von der Grösse der Laminattube des Behälters ist, da es mit der Laminattube nicht in Verbindung oder Berührung steht. Für Hersteller von Behältern mit verschiedenen Durchmessern verringern sich dadurch die Herstellungskosten bedeutend, da lediglich ein einziges Kopfstück hergestellt und gelagert werden muss.

Ein weiterer Vorteil besteht darin, dass durch Verwendung eines relativ dünnen Schulterstücks aus einem Laminat ein relativ weicher Schulterbereich erzielt wird, der das Ausdrücken von Behälterinhalten erleichtert und ausserdem die Materialkosten verringert. Durch das Überdecken der Ausgabeöffnung durch den zentralen Teil des Verbindungskörpers entstehen keine zusätzlichen Kosten, da der zentrale Teil beim Stand der Technik ausgestanzt werden muss und keiner weiteren Verwendung zugeführt werden kann. Bei der Herstellung eines Behälters mit Kappe besteht der Vorteil, dass ein Herstellungsschritt eingespart werden kann, da der Hersteller die Kappe nicht auf den Behälter aufzuschrauben braucht. Dies kann dem Benutzer überlassen bleiben. Zusätzlich wird durch die Kappe zusammen mit dem daran anschliessenden aufbrechbaren Abschnitt ein fälschungssicherer Abschluss des Behälters ermöglicht.

Nachfolgend werden Beispiele von Behältern anhand von Zeichnungen näher erläutert. Es zeigen:

Fig. 1 einen Behälter in Form einer Tube in Seitenansicht, wobei ein Teil des Tubenkörpers im Schnitt dargestellt ist;

Fig. 2 einen Teilschnitt eines Behälters entlang der Linie II–II in Fig. 1;

Fig. 3 einen Teilschnitt durch einen Behälterteil in einem Herstellungsstadium,

Fig. 4 dasselbe wie in Fig. 3 in einem anderen Herstellungsstadium;

Fig. 5–8 andere Ausführungsformen des Behälters in Teilschnitten;

Fig. 9 einen Schnitt durch ein Laminat zur Herstellung des Tubenkörpers und von Schulterstücken.

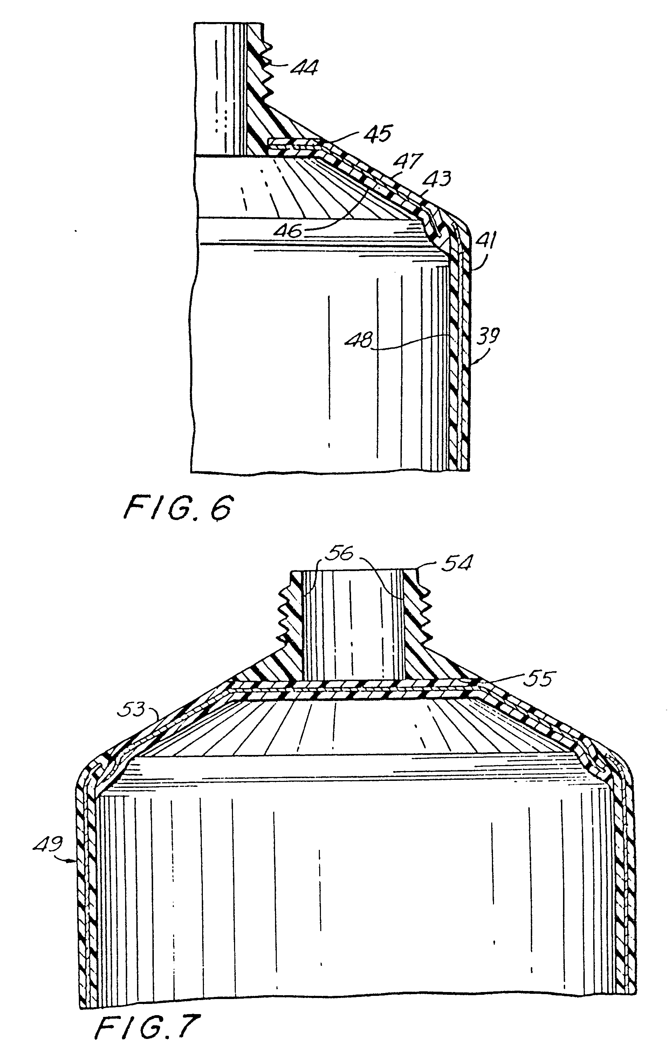

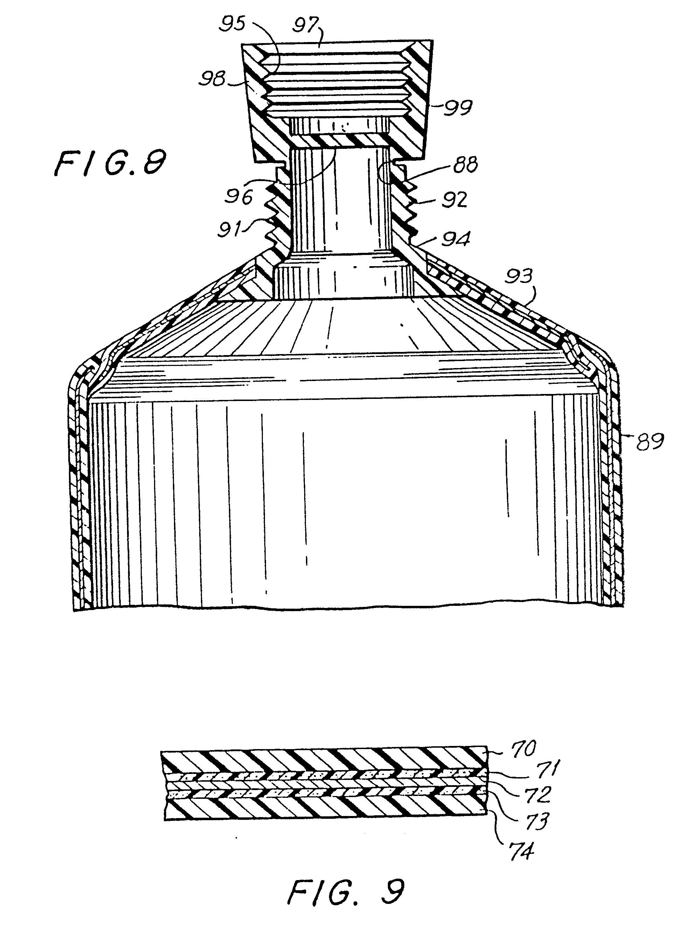

Die Fig. 1 bis 5 und 8 dienen der allgemeinen Erläuterung. Nur Fig. 7 zeigt ein Ausführungsbeispiel gemäss der Erfindung und die Fig. 6 eine Variante, die bei der erfindungsgemässen Ausführung vorgesehen werden kann.

In Fig. 1 ist ein Behälter 40 mit einem Tubenkörper 9 dargestellt, der aus einer Aussenschicht 12, einer Innenschicht 11 und einer zwischen die innere und äussere Schicht eingeschobene Mittelschicht 10 besteht. Die Mittelschicht 10 wird vorzugsweise aus einem Material hergestellt, das eine geringe oder gar keine Durchlässigkeit gebenüber Sauerstoff, Wasserdampf und Ölen aufweist. Beispielsweise kann die Mittelschicht aus einer Metallfolie, Polyester oder Polyvinyliden hergestellt sein. Vorzugsweise besteht die Mittelschicht aus einer Aluminiumfolie. Die Innen- und Aussenschicht 11, 12 bestehen vorzugsweise aus heissiegelfähigen, thermoplastischen Materialien, wie z.B. Polyäthylen.

Der Tubenkörper 9 kann aus einem flachen Laminat mit Hilfe bekannter Techniken hergestellt werden. Vergleiche z.B. die in der US-PS 4 123 312 beschriebene Technik zur Herstellung von Tuben aus flachen Laminaten.

Ausser dem Tubenkörper 9 schliesst der in Fig. 1 dargestellte Behälter 40 ein Schulterstück 13 und ein Kopfstück 14 ein. Der Aufbau dieser zusätzlichen Teile und die Art, wie sie zum Behälter 40 zusammengebaut werden, sind detaillierter in den Fig. 2 bis 4 gezeigt.

Das Schulterstück 13 besteht, wie der Tubenkörper 9, aus einem flexiblen, geschichteten Material, das eine zwischen einer Aussenschicht 19 und einer Innenschicht 20 eingeschobene Mittelschicht 15 aufweist. Die Mittelschicht 15 besteht vorzugsweise aus einem Material, das eine geringe oder gar keine Durchlässigkeit gegenüber Sauerstoff, Wasserdampf oder Ölen aufweist. Die Innen- und Aussenschicht 20, 19, bestehen vorzugsweise aus heissiegelfähigen, thermoplastischen Materialien. Das Kopfstück 14 weist einen zylindrischen Hals 21 mit einem Schraubgewinde 23 sowie eine relativ kurze Schulter 22 auf.

Wie aus Fig. 2 zu ersehen ist, weist das Kopfstück 14 einen beträchtlichen Abstand zum Tubenkörper 9 auf. Dieser Abstand beträgt wenigstens das Dreifache der Stärke des Schulterstücks 13. Typischerweise beträgt dieser Abstand wenigstens des Zehnfache der Stärke des Schulterstücks 13.

In Fig. 2, wie auch in den Fig. 3 bis 8, ist die Stärke des Schulterstücks und der Wand des Tubenkörpers relativ zum Durchmesser des Tubenrohrs übertrieben dargestellt, d.h. der Abstand zwischen dem Kopfstück und der Tube, ausgedrückt in Einheiten der Dicke des Schulterstücks, ist grösser als dies in diesen Figuren erscheint.

Die Aussenfläche der kurzen Schulter 22 steht mit einem Teil der Innenschicht 20 des Schulterstücks 13 in Verbindung. Wie in Fig. 2 gezeigt, ist der obere Teil des Tubenkörpers 9 nach innen gebogen. Ein Teil der Aussenschicht (19) des Schulterstücks 13 steht mit der Innenschicht 11 dieses nach innen gebogenen Teils des Tubenkörpers 9 in Verbindung.

Vorzugsweise werden die Teile des Behälters 40 mit Hilfe eines Heissiegelverfahrens miteinander verbunden. Während des Heissiegelvorgangs können Teile der thermoplastischen Schichten des Behälters um die Kanten 16 der Mittelschicht 15 des Schulterstücks 13 und um die obere Kante 18 der Mittelschicht 10 des Tubenkörpers 9 herumfliessen. Wie aus Fig. 2 ersichtlich, bildet ein Teil des thermoplastischen Stoffes, der um eine der Kanten der Mittelschicht 15 herumgeflossen ist, eine Sperre 17, die die Behälterinhalte gegenüber der Mittelschicht 15 schützt und isoliert.

Alle Teile des Behälters 40, auch nach anderen Ausführungsbeispielen, können mittels einer Anzahl verschiedener Arbeitsvorgänge zusammengesetzt und miteinander heissversiegelt werden. Diese Arbeitsvorgänge weisen folgende Schritte auf:

(a) ein Teil der jeweiligen Fläche des geschichteten Schulterstücks wird gegenüber der Verbindungsfläche des Behälterkopfstückes angeordnet;

(b) die im Schritt (a) zueinander ausgerichteten Teile des Schulterstücks und des Kopfstücks werden zu deren Verbindung erhitzt und zusammengepresst;

(c) ein Teil der Fläche des geschichteten Schulterstücks wird gegenüber dem oberen Teil der Fläche des Laminattubenkörpers angeordnet und

(d) die im Schritt (c) zueinander ausgerichteten Teilbereiche des Schulterstücks und des Kopfstücks werden zu deren Verbindung erhitzt und zusammengepresst.

Vorzugsweise werden die Schritte (b) und (d) im wesentlichen gleichzeitig durchgeführt.

In Fig. 3 ist eine Stufe eines Verfahrens zur Herstellung des in den Fig. 1 und 2 gezeigten Behälters 40 verdeutlicht. Wie gezeigt, sind das Kopfstück 14 und das Schulterstück 13 auf einem Abstützdorn 30 angeordnet. Der Tubenkörper 9 ist dabei um den Abstützdorn 30 herum derart angeordnet, dass sich ein Teil des Tubenkörpers 9 über einen Teil des Schulterstücks 13 hinaus erstreckt. Mit Ausnahme des Kopfstücks 14, das vor oder gleichzeitig mit dem Schulterstück 13 auf dem Dorn 30 angeordnet werden muss, können die anderen Teile des Behälters 40 in beliebiger Reihenfolge auf dem Dorn 30 angeordnet werden.

Sind die Behältereinzelteile, wie in Fig. 3 gezeigt, ausgerichtet, so werden deren Verbindungsflächen zu deren Verbindung erhitzt und zusammengepresst. Dies kann auf beliebige Weise erfolgen, z.B. wie es in Fig. 4 unter Verwendung eines Presswerkzeugs 31 und einer Induktionsspule 36, die um das Presswerkzeug 31 herumgewickelt ist, dargestellt ist. In Fig. 4 ist das Presswerkzeug 31 in einer Lage dargestellt, bei der es sich beim Abwärtshub befindet, und zwar nachdem es das obere Teil des Tubenkörpers 9 nach innen gebogen hat und gerade bevor es die Einzelteile zusammendrückt. Etwa zu dem Zeitpunkt, zu dem das Presswerkzeug 31 beginnt, die Einzelteile zusammenzudrücken, wird ein Stromfluss in der Induktionsspule 36 erzeugt, um ein Hochfrequenzmagnetfeld vorzusehen. Das Magnetfeld wird bei einer Frequenz und für eine Zeitspanne aufrechterhalten, dass die Aluminiumschichten in dem Schulterstück 13 und dem Tubenkörper 9 (Mittelschichten 15 bzw. 10) erhitzt und die benachbarten thermoplastischen Schichten erweicht werden.

Nachdem die thermoplastischen Schichten in einem Ausmass erweicht wurden, um eine Schmelzverbindung zwischen den benachbarten Schichten zu ermöglichen, wird der durch die Induktionsspule 36 fliessende Strom abgeschaltet, so dass der Behälter abkühlt. Während des Abkühlvorganges presst das Presswerkzeug 31 weiterhin die Teile des Behälters zusammen, so dass sie miteinander eine Schmelzverbindung eingehen. Nachdem die Schmelzverbindung ausgeführt ist, wird das Presswerkzeug 31 nach oben bewegt und der Behälter mit offenem Boden vom Dorn 30 entfernt.

Nach Entfernen des Behälters vom Dorn 30 kann der spezielle Inhalt durch den offenen Boden des Behälters in das Innere des Behälters eingeführt werden. Der Boden wird anschliessend verschlossen, z.B. mit Hilfe eines Heisssiegelvorgangs.

Ein anderes Ausführungsbeispiel eines Behälters ist in Fig. 5 gezeigt. Dieses Ausführungsbeispiel weist ein Kopfstück 24, ein geschichtetes Schulterstück 28 und einen Laminattubenkörper 9 auf. Wie aus Fig. 5 ersichtlich, liegt das Schulterstück 23 im wesentlichen in einer horizontalen Ebene. Behälter von dem in Fig. 5 gezeigten Typ sind insbesondere zur Aufbewahrung und Verteilung von dickflüssigen Nahrungsmitteln, wie z.B. Ketchup und Senf, vorteilhaft.

In Fig. 6 ist ein Ausführungsbeispiel des Behälters dargestellt, das ein Kopfstück 44, ein geschichtetes Schulterstück 43 und einen Laminattubenkörper 39 aufweist. Bei diesem Ausführungsbeispiel stellt eine Bodenfläche 45 des Kopfstücks 44 die Verbindungsfläche mit dem Schulterstück 43 dar. Ein Teil der Oberfläche des Schulterstücks 43 steht mit dieser Bodenfläche 45 in Verbindung.

Der in Fig. 6 dargestellte Behälter ist dann besonders geeignet, wenn es von Bedeutung ist, dass das Innere des Behälters völlig undurchlässig für den Behälterinhalt sein soll. Z.B. weisen gewisse Zahnpasten geschmacksbildende Substanzen auf, die während der Lagerung in das Innere des Behälters eindringen, falls dieses Behälterinnere aus Polyäthylen besteht. Dieses Phänomen tritt insbesondere an der Oberseite des Behälters auf, wo die Zahnpaste nahe dem Hals und dem oberen Schulterteil des Behälters liegt. Dies resultiert in einem unbefriedigenden, «geringen» Geschmack der Zahnpaste, die vom Verbraucher zuerst aus dem Behälter herausgedrückt wird.

Eine Lösung dieses Problems besteht darin, das Innere des Behälters aus Polyester aufzubauen, der tatsächlich für solche geschmacksbildenden Substanzen und ebenso für viele andere Materialien, undurchlässig ist. Polyester haben jedoch den Nachteil, dass nur sehr schwierig zwischen einem Polyester und einem anderen Polyester eine Schmelzverbindung hergestellt werden kann. Andererseits ist es relativ einfach, zwischen Polyäthylen und Polyäthylen oder Polyäthylen und Polyester eine Schmelzverbindung herzustellen.

Eine Folge dieser Schwierigkeit, zwei Polyester durch eine Schmelzverbindung miteinander zu verbinden, besteht darin, dass es aus wirtschaftlicher Sicht ungangbar ist, den in Fig. 2 gezeigten Behälter so herzustellen, dass das gesamte Innere des Behälters aus undurchlässigem Polyester aufgebaut ist. Der Grund dafür besteht darin, dass – falls das Kopfstück 14 des Behälters aus Polyester aufgebaut wäre – es dann wirtschaftlich ungangbar wäre, die Innenschicht 20 des Schulterstücks 13 aus Polyester herzustellen, und zwar infolge der Schwierigkeiten, die beim Verbinden einer solchen Schicht mit einem Polyester-Kopfstück auftreten.

Andererseits ist es von Vorteil, den in Fig. 6 dargestellten Behälter derart herzustellen, dass das gesamte Innere des Behälters aus Polyester besteht. Dies kann dadurch erreicht werden, dass man die Innenschicht 46 des geschichteten Schulterstücks 43 und die Innenschicht 48 des Laminattubenkörpers 39 aus Polyester herstellt. Eine gute Schmelzverbindung zwischen den Behälterkomponenten kann dadurch erzielt werden, dass man die Aussenschicht 47 des geschichteten Schulterstücks 43 und die Aussenschicht 41 des Laminattubenkörpers 39 aus Polyäthylen herstellt.

In Fig. 7 ist ein Ausführungsbeispiel des erfindungsgemässen Behälters dargestellt. Der Behälter besteht aus einem Kopfstück 54, einem geschichteten Schulterstück 53 und einem Laminattubenkörper 49. Wie aus Fig. 7 ersichtlich, steht das Schulterstück 53 mit der gesamten Bodenfläche 55 des Kopfstücks 54 in Verbindung. Hierbei erstreckt sich das Schulterstück 53 quer über den zylindrischen Hals 56 des Kopfstücks 54. Beim Gebrauch verhindert dies, dass irgendein Fremdstoff durch den zylindrischen Hals 56 des Behälters in das Behälterinnere eindringen kann, und zwar solange nicht, bis das Schulterstück 53 durchbrochen wird.

In Fig. 8 ist ein aus Behälterkopfstück 94, geschichtetem Schulterstück 93 und Laminattubenkörper 89 bestehender Behälter dargestellt, der ein Kopfstück 94 mit einer fälschungssicheren Kappe 99 aufweist. Die Kappe 99 weist eine zylindrische Wand 98 auf und hat ein offenes oberes Ende 97 und ein geschlossenes unteres Ende 96. Das Innere der zylindrischen Wand 98 ist mit einem Schraubgewinde 95 versehen. Wie aus Fig. 8 zu ersehen ist, weist die zylindrische Wand 98 eine leichte kegelstumpfförmige Gestalt auf, um das Aufschrauben der Kappe 99 auf den zylindrischen Hals 92 des Behälterkopfstückes 94 zu erleichtern. Der hier verwendete Ausdruck «zylindrische Wand» schliesst somit auch Wände ein, die eine leichte kegelstumpfförmige Gestalt aufweisen.

Die Kappe 99 ist mit Hilfe eines aufbrechbaren Abschnitts 88 am zylindrischen Hals 92 des Kopfstücks 94 befestigt. Der hier verwendete Ausdruck «aufbrechbarer Abschnitt» bedeutet einen die Kappe und den zylindrischen Hals eines Behälters verbindenden Abschnitt, der von Hand zerbrochen bzw. aufgebrochen werden kann, um die Kappe von den übrigen Teilen des Behälters abzutrennen.

Ehe der aufbrechbare Abschnitt 88 vom Verbraucher (z.B. durch Verdrehen) aufgebrochen wird, dient dieser Abschnitt 88 zusammen mit dem geschlossenen unteren Ende 96 der Kappe 99 dazu, das Eindringen von irgendwelchen Fremdstoffen über den zylindrischen Hals in das Innere des Behälters zu verhindern, und als Sicherheits- und Originalitätsverschluss. Dies stellt ein äusserst wünschenswertes Sicherheitsmerkmal des Kopfstücks dar. Nach dem Aufbrechen des Abschnitts 88 kann die Kappe 99 auf den zylindrischen Hals 92 aufgeschraubt werden.

Obwohl die in Fig. 8 gezeigte Kappe und die in den Fig. 1 bis 8 gezeigten zylindrischen Hälse Schraubgewinde aufweisen, können auch andere Verschlüsse gewählt werden, beispielsweise kann die Kappe eine glatte Innenfläche aufweisen, die auf eine glatte Aussenfläche des zylindrischen Behälterhalses unter Ausbildung einer Haftreibung aufgesetzt werden kann. Die Verwendung eines im wesentlichen horizontalen Schulterstücks gemäss Fig. 5 und einer Sicherheitskappe gemäss Fig. 8 ist nicht auf diese Ausführungsbeispiele beschränkt und ist beliebig mit anderen Ausführungsformen kombinierbar.

Die Kappe und der ihr zugeordnete aufbrechbare Abschnitt werden als integrierter Bestandteil des zylindrischen Halses einfach durch Ausformen der Kappe, des aufbrechbaren Abschnitts und des zylindrischen Halses (einschliesslich irgendwelcher zugehöriger Teile, wie z.B. einem Schulterteil) in einer geeigneten Form erhalten.

Bei jedem der in den Fig. 1 bis 8 dargestellten Ausführungsbeispielen besteht sowohl das geschichtete Schulterteil als auch der Laminattubenkörper aus drei Schichten, sie können in einem weiten Bereich aus Laminaten mit zwei oder mehr Schichten aufgebaut sein und auch Schichten aufweisen, die aus anderen Materialien als Thermoplaste oder Metallen aufgebaut sind. Z.B. kann eine Schicht aus bedrucktem Papier Verwendung finden.

Fig. 9 zeigt ein bevorzugtes Laminat, das zur Herstellung von geschichteten Schulterstücken und Laminattubenkörpern für Behälter verwendet werden kann. Bei diesem bevorzugten Laminat besteht die Schicht 70 aus Polyäthylen, die Schicht 71 aus Äthylen-Acrylsäure, die Schicht 72 aus einer Aluminiumfolie, die Schicht 73 aus Äthylen-Acrylsäure und die Schicht 74 aus Polyäthylen. Die Äthylen-Acrylsäure dient als Klebemittel zwischen der Aluminiumfolie und den Polyäthylenschichten.

**Patentansprüche**

1. Zusammendrückbarer Behälter mit einem vorgeformten Kopfstück (14, 24, 44, 54, 94) mit zylindrischem Hals (21, 56, 92), einer Ausgabeöffnung und einer die Ausgabeöffnung überdeckenden Kappe (99), mit einem geschichteten Schulterstück (13, 28, 43, 53, 93), das wenigstens eine Aussen- und eine Innenschicht (19, 20, 46, 47) aufweist, und mit einem Tubenkörper (9, 39, 49, 89) aus einem mehrschichtigen Laminat mit mindestens einer Aussen- und Innenschicht (11, 12, 41, 48), wobei das Schulterstück (13, 28, 43, 53, 93) mit dem Kopfstück (14, 24, 44, 54, 94) und mit dem oberen Rand des Tubenkörpers (9, 39, 49, 89) verbunden ist, und das Kopfstück (14, 24, 44, 54, 94) eine Schulter (22) mit einer Fläche aufweist, die die Verbindungsfläche mit dem Schulterstück (13, 28, 43, 53, 93) ist, dadurch gekennzeichnet, dass der Aussenrand des Kopfstücks (14, 24, 44, 54, 94) in einem Abstand vom Tubenkörper (9, 39, 49, 89) angeordnet ist, der mindestens das Dreifache der Stärke des Schulterstücks (13, 28, 43, 53, 93) beträgt, dass die Verbindungsfläche des Kopfstücks (44, 54) mindestens ein Teil der Bodenfläche (45, 55) der Schulter des Kopfstücks (44, 54) ist, und dass das Schulterstück (53) den zylindrischen Hals (56) des geformten Kopfstücks (54) überdeckt.

2. Behälter nach Anspruch 1, dadurch gekennzeichnet, dass ein Teil der Innenschicht (46) des Schulterstücks (43) mit der Aussenschicht (41) des oberen Randes der Laminattube (39) in Verbindung steht.

3. Behälter nach Anspruch 1 und 2, dadurch gekennzeichnet, dass das Kopfstück (14, 24, 44, 54, 94) die Innenschicht (20, 46) des Schulterstücks (13, 28, 43, 53, 93) und die Innenschicht (11, 48) des Tubenkörpers (9, 39, 49, 89) aus einem Polyester bestehen.

4. Behälter nach Anspruch 1, dadurch gekennzeichnet, dass das Kopfstück (44, 54) und die Aussenschicht (47) des Schulterstücks (43, 53) aus einem Poylester bestehen.

5. Behälter nach einem der Ansprüche 1 bis 4, dadurch gekennzeichnet, dass der Aussenrand des Kopfstücks (14) vom Laminattubenkörper (9) einen Abstand von mindestens etwa des Zehnfachen der Stärke des Schulterstücks (13) aufweist.

6. Behälter nach einem der Ansprüche 1 bis 5, dadurch gekennzeichnet, dass das untere Ende der Kappe (99) mittels eines aufbrechbaren Abschnitts (88) mit dem zylindrischen Hals (92) verbunden ist und dass die Kappe (99) eine zylindrische Wand (98), ein geschlossenes, den zylindrischen Hals (92) überdeckendes Ende (96) sowie ein offenes oberes Ende (97) aufweist, wobei die zylindrische Wand (98) derart ausgestaltet und aufgebaut ist, dass deren Innenseite auf die Aussenseite des zylindrischen Halses (92) des geformten Kopfstückes aufsetzbar ist.

7. Behälter nach Anspruch 6, dadurch gekennzeichnet, dass die Innenseite der zylindrischen Wand (98) der Kappe (99) und die Aussenseite des zylindrischen Halses (92) Schraubgewinde (95, 91) aufweisen, die derart angeordnet und aufgebaut sind, dass nach dem Aufbrechen des aufbrechbaren Abschnitts (88) die Kappe (99) auf den zylindrischen Hals (92) aufschraubbar ist.

8. Behälter nach einem der Ansprüche 1 bis 7, dadurch gekennzeichnet, dass das geschichtete Schulterstück (28) im wesentlichen in einer horizontalen Ebene liegt.

## Claims

1. Compressible container with a preformed head member (14, 24, 44, 54, 94) with a cylindrical neck (21, 56, 92), a delivery aperture and a cap (99) adapted to cover the delivery aperture, with a laminated shoulder member (13, 28, 43, 53, 93), having at least one external and one internal stratum (19, 20, 46, 47) and with a tubular member (9, 39, 49, 89) comprising a multistratum laminate having at least one external and internal stratum (11, 12, 41, 48), the shoulder member (13, 28, 43, 53, 93) being connected to the head member (14, 24, 44, 54, 94) and to the top edge of the tubular member (9, 39, 49, 89), and the head member (14, 24, 44, 54, 94) having a shoulder (22) with a surface, which is the surface providing the connection to the shoulder member (13, 28, 43, 53, 93), characterised in that the external edge of the head member (14, 24, 44, 54, 94) is situated at a distance from the tubular member (9, 39, 49, 89), such distance being at least three times the thickness of the shoulder member (13, 28, 43, 53, 93), that the connecting surface of the head member (44, 54) is at least part of the bottom surface (45, 55) of the shoulder associated with the head member (44, 54) and that the shoulder member (53) covers the cylindrical neck (56) of the moulded head member (54).

2. Container according to claim 1, characterised in that one part of the internal stratum (46) of the shoulder member (43) is connected to the outer stratum (41) of the top edge of the laminated tube (39).

3. Container according to claim 1 and 2, characterised in that the head member (14, 24, 44, 54, 94), the internal stratum (20, 46) of the shoulder member (13, 28, 43, 53, 93) and the internal stratum (11, 48) of the tubular member (9, 39, 49, 89) are constructed of a polyester.

4. Container according to claim 1, characterised in that the head member (44, 54) and the external stratum (47) of the shoulder member (43, 53) are constructed of a polyester.

5. Container according to any of the claims 1 to 4, characterised in that the external edge of the head member (14) is situated at a distance of at least approximately ten times the thickness of the shoulder member (13) from the laminated tube member (9).

6. Container according to any of the claims 1 to 5, characterised in that the bottom end of the cap (99) is connected via a breakable portion (88) to the cylindrical neck (92) and that the cap (99) is provided with a cylindrical wall (98), a closed end (96), which covers the cylindrical neck (92), and an open top end (97), the cylindrical wall (98) being so shaped and constructed that its inside can be placed on the outside of the cylindrical neck (92) of the moulded head member.

7. Container according to claim 6, characterised in that the inside of the cylindrical wall (98) of the cap (99) and the outside of the cylindrical neck (92) is provided with screw threading (95, 91), which is so disposed and constructed that the cap (99) may be screwmounted on the cylindrical neck (92) after the breakable portion (88) is broken open.

8. Container according to any of the claims 1 to 7, characterised in that the laminated shoulder member (28) is substantially situated in one horizontal plane.

## Revendications

1. Récipient compressible comprenant une tête préformée (14, 24, 44, 54, 94) à col cylindrique (21, 56, 92), un orifice de délivrance et un capuchon (99) coiffant cet orifice de délivrance, une pièce d'épaulement stratifiée (13, 28, 43, 53, 93) comprenant au moins une couche externe et une couche interne (19, 20, 46, 47), et un corps tubulaire (9, 39, 49, 89) en une structure stratifiée multicouche comprenant au moins une couche externe et une couche interne (11, 12, 41, 48), la pièce d'épaulement (13, 28, 43, 53, 93) étant reliée à la tête (14, 24, 44, 54, 94) et au bord supérieur du corps tubulaire (9, 39, 49, 89), et la tête (14, 24, 44, 54, 94) présentant un décrochement (22) muni d'une surface constituant la surface de liaison avec la pièce d'épaulement (13, 28, 43, 53, 93), caractérisé par le fait que le bord externe de la tête (14, 24, 44, 54, 94) est espacé, du corps tubulaire (9, 39, 49, 89), d'une distance représentant au moins le triple de l'épaisseur de la pièce d'épaulement (13, 28, 43, 53, 93); par le fait que la surface de liaison de la tête (44, 54) est au moins une partie de la surface de fond (45, 55) du décrochement de cette tête (44, 54); et par le fait que la pièce d'épaulement (53) coiffe le col cylindrique (56) de la tête moulée (54).

2. Récipient selon la revendication 1, caractérisé par le fait qu'une partie de la couche interne (46) de la pièce d'épaulement (43) est reliée à la couche externe (41) du bord supérieur du tube stratifié (39).

3. Récipient selon les revendications 1 et 2, caractérisé par le fait que la tête (14, 24, 44, 54, 94), la couche interne (20, 46) de la pièce d'épaulement (13, 28, 43, 53, 93) et la couche interne (11, 48) du corps tubulaire (9, 39, 49, 89) consistent en un polyester.

4. Récipient selon la revendication 1, caractérisé par le fait que la tête (44, 54) et la couche externe (47) de la pièce d'épaulement (43, 53) consistent en un polyester.

5. Récipient selon l'une des revendications 1 à 4, caractérisé par le fait que le bord externe de la tête (14) accuse, par rapport au corps tubulaire stratifié (9), une distance représentant au moins sensiblement le décuple de l'épaisseur de la pièce d'épaulement (13).

6. Récipient selon l'une des revendications 1 à 5, caractérisé par le fait que l'extrémité inférieure du capuchon (99) est reliée au col cylindrique (92) au moyen d'une région fracturable (88); et par le fait que le capuchon (99) comprend une paroi cylindrique (98), une extrémité fermée (96) recouvrant le col cylindrique (92), ainsi qu'une extrémité supérieure ouverte (97), la paroi cylindrique (98) étant de configuration et de réalisation telles que sa face intérieure puisse être placée sur la face extérieure du col cylindrique (92) de la tête moulée.

7. Récipient selon la revendication 6, caractérisé par le fait que la face intérieure de la paroi cylindrique (98) du capuchon (99) et la face extérieure du col cylindrique (92) présentent des filetages (95, 91), qui sont disposés et ménagés de telle sorte que le capuchon (99) puisse être vissé sur le col cylindrique (92) après rupture de la région fracturable (88).

8. Récipient selon l'une des revendications 1 à 7, caractérisé par le fait que la pièce d'épaulement stratifiée (28) se trouve sensiblement dans un plan horizontal.

0 114 398

FIG.1

FIG.2

FIG.3

9

*FIG.4*

14

36

31

13

30

9

*FIG.5*

24

28

9

FIG. 6

FIG. 7

FIG.8

FIG. 9